# EUROPEAN PATENT SPECIFICATION

(11) **EP 2 595 837 B1**
(45) Date of publication and mention of the grant of the patent: **20.04.2016**
(21) Application number: 11740970.6
(22) Date of filing: 19.07.2011
(51) Int. Cl.: B60N 3/04, D06N 7/00

(54) **ADHESIVE PRODUCTS IN SHEET FORM**
FLÄCHIGE KLEBEPRODUKTE
PRODUITS ADHÉSIFS EN FEUILLE

(30) Priority: 19.07.2010 GB 201012089; 19.07.2010 GB 201012088
(43) Date of publication of application: 29.05.2013
(73) Proprietor: Instafibre Ltd, Wokingham, Berkshire RG40 4PZ (GB)
(72) Inventor: ERASMUS, Duonne, 3245 Hilton (ZA)
(74) Representative: Deans, Michael John Percy
(86) International application number: PCT/GB2011/001080
(87) International publication number: WO 2012/010830

(56) References cited:
- WO-A1-2006/127837
- GB-A- 2 299 781
- US-A1- 2008 075 915

## Description

This disclosure relates to adhesive products in sheet form. In particular, but not exclusively, it relates to adhesive products in sheet form suitable for use as underlays, for example for floor coverings.

Crumb-rubber underlays in which the crumbs are bonded to each other and to a supporting scrim layer on at least one side have been used as general purpose flooring underlays for over 40 years as they have a number of inherent properties that make them especially useful for the higher end of the market, namely:
- relatively high mass per unit volume (density), which produces a material that has a high "flop-weight";
- highly efficient acoustic insulation properties as a consequence of its relatively high density;
- the crumb-rubber particles, which make up 80-90% of the volume of the product, consist of vulcanised rubber and therefore cannot collapse over time;
- an open-cell structure resulting from bonding of the rubber granules to one another during manufacture of the product using a synthetic rubber binder;
- during compression of the product, the vulcanised rubber granules compress and then immediately rebound to their original shape once the pressure is released, so that the product always returns to its original shape and thickness after compression, regardless of the extent or duration of that compression;
- as compared with a solid rubber sheet, the flexible open-cell structure allows the product to be compressed relatively easily when subjected to a point load, and yet provides a firm, non-collapsing surface when subject to a distributed load;
- the open-cell structure allows air to flow freely through the material, making the product more "breathable" and more hygienic at the microbial level;
- the open-cell structure allows heat transfer through air circulation, but still has relatively good thermal insulation properties;
- the product can be flooded and then dried *in situ* without altering performance or causing odours; and
- exposed rubber granules form a surface that results in enhanced grip on most surfaces with which it comes into contact.

Despite these known properties and this long period of use, it appears that it was not until 2008 that any proposal was made for a crumb-rubber underlay with a scrim material layer on at least one side to be provided with a coating of a pressure sensitive adhesive. Just such an underlay is proposed in ZA 2008/04310 of Rubber Lay (Pty) Ltd. No specific adhesive, nor any properties for such adhesive are suggested in ZA 2008/04310, save that the adhesive may be a pressure sensitive adhesive and may be directly applied or applied over a first coating of amorphous, high temperature, hot melt adhesive. The adhesive was disclosed in ZA 2008/04310 as being protected by a silicone release paper that could be removed by a floor-covering installer to expose the adhesive to allow the underside of the floor covering to be adhered to the exposed adhesive of the underlay.

It appears that this underlay may not have been a commercial success since Rubber Lay (Pty) Ltd went into voluntary liquidation in February 2009, only small sample volumes of their crumb-rubber underlay product having ever been produced.

The problem, glossed over in ZA 2008/04310, lies in the choice of a suitable pressure sensitive adhesive. As will become clear from the detailed disclosure below, this problem had not been adequately solved by any specific product of Rubber Lay (Pty) Ltd. The present disclosure, which may be regarded as a selection from the broad disclosure of ZA 2008/04310, provides one solution to that problem. Reference may also be made to British Patent Application No: 1012088.9 (M.J.P. Deans Reference No: P10748GB), filed on the same date as British Patent Application No: 1012089.7 from which the present Application claims priority and to our copending British Patent Application No: (M.J.P. Deans Reference No: P10820GB) filed the same day as this Application, which disclose an alternative and different solution to the problem.

Our analysis of potential applications for underlays, both traditional flooring underlays and other applications by extension, established that there was a need for two distinct types of underlay, namely those that call for high adhesive strength (hereafter: "high-grab") for best results, where flooring is intended for permanent installation but where there is still some margin for error and adjustment during placement, and those that call for significantly lower adhesive strength (hereafter: "low-grab") for best results, where flooring may need to be lifted intact for replacement or repositioning at a later date.

Reference may be made to Table 1 below which, in addition to distinguishing between high-grab and low-grab for use with different flooring products, also identifies whether a 3 mm or 5 mm flat product or a 6 mm ribbed product gives best results.

**Table 1**

| | | | | | | |
|---|---|---|---|---|---|---|
| | **Low Grab Products** | | | **High Grab Products** | | |
| **Installation Types by Market Segment** | **3mm Flat** | **5mm Flat** | **6mm Ribbed** | **3mm Flat** | **5mm Flat** | **6mm Ribbed** |
| **Commercial Segment** | | | | | | |
| ***Carpet (wheeled Traffic)*** | | | | | | |
| Woven Broadloom (double stick) | | | | * | * | |
| Tufted Broadloom (double stick) | | | | * | * | |
| Tufted Tiles (double stick, no replacement) | | | | * | * | |
| Needlepunch Broadloom (double stick) | | | | * | * | |

| ***Carpet (med*/*low'traffic)*** | | | | | | |
|---|---|---|---|---|---|---|
| Woven Broadloom (single stick) | | | | * | * | * |
| Woven Broadloom (double stick) | | | | * | * | |
| Tufted Broadloom (single stick) | | | | * | * | * |
| Tufted Broadloom (double stick) | | | | * | * | |
| Tufted Tiles (double stick, replacement) | * | * | | | | |
| Tufted Tiles (double stick, no replacement) | | | | * | * | |
| Needlepunch Broadloom (single stick) | | | | | * | |
| Needlepunch Broadloom (double stick) | | | | * | * | |

| ***Needlepunch carpet tiles replacement required-*** | | | | | | |
|---|---|---|---|---|---|---|
| Needlepunch tiles (backed, single stick/double stick) | * | * | | | | |

| ***Needlepunch tiles - no replacement*** | | | | | | |
|---|---|---|---|---|---|---|
| Needlepunch tiles (backed/unbacked, single/double stick) | | | | * | * | |
| | | | | | | |

| **Residential & DIY Segments** | | | | | | |
|---|---|---|---|---|---|---|
| ***Carpet*** | | | | | | |
| Woven & Tufted Broadloom (single stick) | | | | * | * | * |
| Tufted tiles | * | * | | * | * | |
| Needlepunch Broadloom (single stick) | | | | | * | |
| Needlepunch Broadloom (double stick) | | | | * | * | |
| Needlepunch Tiles (backed, single/double stick, replacement) | * | * | | | | |
| Needlepunch Tiles (unbacked, single/double stick) | | | | * | * | |
| | | | | | | |

| **Commercial, Residential & DIY Segments** | | | | | | |
|---|---|---|---|---|---|---|
| ***Wood (all single stick)*** | | | | | | |
| Tongue & Groove Solid floating | | | | * | * | |
| Tongue & Groove Engineered floating | | | | * | * | |
| Double-click Engineered floating | * | * | | | | |
| Laminate | * | * | | | | |
| *Vinyl* | | | | | | |
| Sheeting (double stick) | | | | * | | |
| | | | | | | |
| Loose Rugs (non-slip, removable underlay) | * | | | | | |
| | | | | | | |

As will become clear from the description below, the present disclosure provides a solution to the choice of a suitable adhesive where flooring needs to be lifted intact for replacement or repositioning at a later date.

In accordance with a first aspect of the present disclosure, there is provided a product, generally in sheet form, allowing adjustment in positioning on installation and subsequent removal, the product comprising: a layer comprising crumb-rubber material, and having a first side and a second side; scrim material bonded to at least one of said first and second sides; and a coating of a pressure sensitive adhesive applied to at least part of the exposed surface of the scrim material; characterized in that the pressure sensitive adhesive is a low-grab adhesive, a low-grab adhesive being defined as an adhesive which, when used to adhere a rubber test strip 25 mm wide and 200 mm long to a glass substrate, after 24 hours adhesive binding dwell-time the force required to pull apart the test strip and glass substrate by a test rig at an angle of 90° by drawing an edge of the rubber strip perpendicularly away from the glass substrate at 300 mm/minute, at room temperature (23°C ± 1° C) and at a relative humidity of 50% ± 5%, is between 1.77 and 3.96 Newtons.

Preferred embodiments may have one or more of the following features: The product is an underlay for a floor covering. Alternatively the product is formed as a slip-resisting material to be adhered to the base of a sofa or to the underside of a loose cushion to resist movement on upholstered furniture or to be adhered to the underside of a rug. In yet another alternative, the product is formed as a removable mat or flooring for a motor vehicle for use on the floor of the seating compartment or on the floor of the boot (trunk), the adhesive holding the mat/flooring in place but allowing it to be removed for cleaning, and the crumb-rubber surface providing slip resistance, as well as cushioning for objects, for example luggage, placed on the mat/flooring. The crumb-rubber material suitably comprises individual crumbs of rubber bonded together by a bonding agent. A removable silicone-coated release sheet is adhered to the exposed adhesive surface.

Embodiments of adhesive product in accordance with the teachings of this disclosure are described in more detail hereinbelow by way of example only with reference to the accompanying drawings, in which:
Fig. 1 shows a somewhat schematic perspective side elevation of a portion of a first embodiment of underlay;
Fig. 2 shows a similarly schematic side elevation of a portion of a second embodiment of underlay;
Fig. 3 shows a similarly schematic side elevation of a portion of a third embodiment of underlay;
Fig. 4 shows a diagram illustrating a peel adhesion test employing the FINAT Test Method No: 2; and
Fig. 5 is a graph showing peel adhesion test results for test samples of adhesive applied at different coat weights, and for a comparative sample, in each case after 24 hours adhesive binding dwell-time.

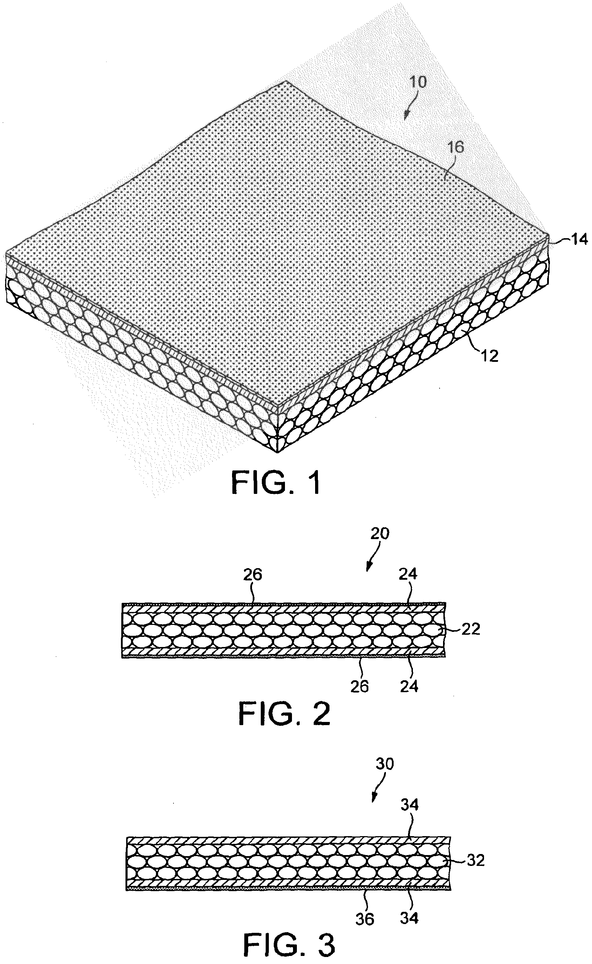

Referring first to Fig. 1, a generally sheet form underlay 10 includes a crumb-rubber layer 12 with scrim material 14 bonded to a first surface of the crumb-rubber layer. It will be understood that, in practice, the individual crumbs of the crumb-rubber layer will not be uniform in size or exclusively oval in section. Crumb rubber underlays bonded to scrim are well known, as are their manufacturing techniques, and so only a brief description is deemed necessary here. The scrim is bonded to the rubber crumbs and the crumbs to each other at the same time. The "wet" crumb-rubber compound (that is: including a synthetic rubber latex or natural rubber binder) is laid onto the scrim prior to moving under a doctor blade which skims the wet compound to the correct thickness. The scrim then carries the wet compound through the curing oven and, as the binder sets, it binds the crumb rubber particles to one another and, at the same time, to the scrim which is carrying the compound through the curing stenter oven. The thickness of the rubber layer is suitably between 2mm and 15mm. Preferred thicknesses for different forms of flooring are set out in Table 1 above, but other thicknesses within the above range may be used. For example, an 8mm product would show enhanced acoustic performance. The rubber layer may be flat with a uniform thickness across both width and length of the underlay, as shown in Fig. 1, or may be undulating with a corrugated profile on its second side, as in the 6 mm ribbed version referred to in Table 1. In the particular embodiment illustrated in Fig. 1, a low-grab adhesive 16, as defined herein and explained in more detail below, is applied evenly to the surface of the scrim material 14. The adhesive could equally well be applied in a pattern of spots or as uniform bands or overlapping swirl-spray strands across the surface of scrim material 14. The adhesive may additionally be applied to the rubber surface.

The scrim material may be chosen from different weights of non-woven polypropylene, woven polypropylene, woven poly-jute, namely a combination of woven polypropylene and jute, jute, fiberglass reinforced cellulose, woven fiberglass, non-woven fiberglass, woven polyester, non-woven polyester, or of stitch bonded crepe paper, but is typically a 34g/m² or 60g/m² non-woven polypropylene. For practical manufacturing considerations, we prefer the 60g/m² non-woven polypropylene.

Although not illustrated, it will be understood that a release sheet, suitably a film coated with a silicone release layer, covers the adhesive to protect it, and is peeled off before adhering the underlay to a floor or floor covering surface by the adhesive 16.

Fig. 2 shows a similar underlay 20, which differs from that of Fig. 1 by having a crumb-rubber layer 22 with scrim material 24 bonded to both surfaces thereof, and with low-grab adhesive 26 applied to both scrim material layers. The embodiment of Fig. 3 is similar, with a crumb-rubber layer 32 having scrim material 34 bonded to both surfaces thereof, but has adhesive 36 applied to only one scrim material layer. Production of underlays with double scrim layers is similar to the process described above, the only difference being that the "wet" rubber crumb material is sandwiched between the two scrims which are bonded to the sandwiched material during the curing process in the stenter oven.

The low-grab adhesive 16, 26 or 36 is important for installation of the flooring types for which it is intended, in order to get superior results. The present underlays with their low-grab adhesives are employed where a degree of adjustment in placement of the underlay in the correct position is desired or where the flooring installation is likely to need to be lifted subsequently. Similar adhesive is employed for other embodiments of sheet-form adhesive product for adhesion to cushions, couches, the boots (trunks) of motor vehicles, or loose mats as described further below, in each of which there may be a need for the sheet-form product to be removed subsequently without transferring adhesive to the substrate or causing damage on removal.

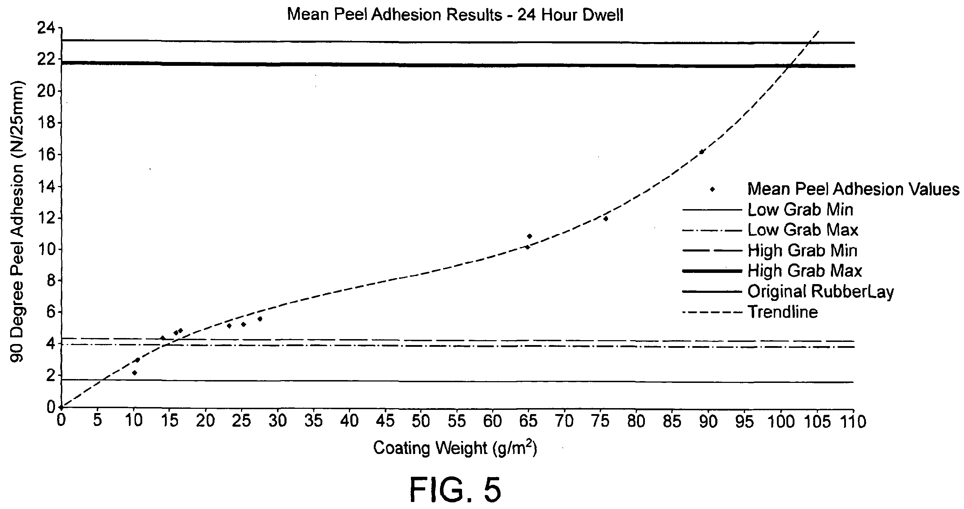

Tests for peel adhesion were performed with a number of samples using the FINAT Test Method No: 2 (as explained in more detail below). The results are set out in Table 2 (below) and Fig. 5.

Different adhesives show different characteristics, and we have established that neither choice of adhesive alone nor coat weight alone is an adequate indicator, but rather that peel adhesion is the only reliable measure of whether an adhesive present on a product in sheet form suitable for use as an underlay may be regarded as a high-grab adhesive or as a low-grab adhesive. As will be apparent from analysis of the test results explained below, the same adhesive may serve as a high-grab adhesive under some conditions and as a low-grab adhesive under others.

We achieved the test results shown in Table 2 and Fig. 5 using a commercially available adhesive, namely Unikem™ HPS 800 C, but other commercially available adhesives such as Henkel™ PD 1573 or Advanced Adhesives™ XM 2218 could equally well have been employed. The experimental data given in Table 2 and illustrated in graphical form in Fig. 5 is the mean of three replications at each coating weight of the adhesive. Peel adhesion was determined by the FINAT Test method No: 2 peel adhesion test performed after 24 hours adhesive binding dwell-time at room temperature (23°C ± 1° C) and at a relative humidity of 50% ± 5%, the temperature and humidity conditions of a typical laboratory. While the FINAT Test method No: 2 peel adhesion test performed after 20 minutes adhesive binding dwell-time, discussed in British Patent Application No: 1012089.7, can also produce results suggesting high-grab or low-grab characteristics, these results tend to be less reliable and less consistent than with the 24 hour adhesive binding dwell-time, and give spurious results with some coat weights, as a result of the much shorter adhesive binding dwell-time. Accordingly, we now much prefer the FINAT Test method No: 2 peel adhesion test after 24 hours adhesive binding dwell-time as a means of differentiating between high-grab, low-grab and neither. It is generally indicative of the final peel adhesion of practical underlays.

For the present tests, adhesive coating was achieved by using a Nordson™ BM200 Drum Melter in combination with a Nordson™ MX44160 Bulk Melter and a Nordson™ BC31-4/2100 Slot Nozzle Coating Head. In the Drum Melter a heated platen is forced down by two air cylinders on to a puddle of hot melt adhesive under the platen. The hot melt flows up into a positive displacement gear pump mounted on the platen and along a heated hose to the Bulk Melter, which has three main casting assemblies, namely hopper, grid and reservoir through which the hot melt passes. The reservoir has four positive displacement pumps at which the hot melt is forced through a filter and out into a heated hose to the Slot Nozzle Coating Head. A pressure transducer and pressure control valve is fitted in each pump outlet. The Slot Nozzle Coating Head has four shut-off valves to which the heated hoses are connected, and which control the flow of adhesive into the slot nozzle. They deliver the hot melt into the internal passages designed to ensure an even coating thickness across a width selected by a set of shims. The coating weight applied to a substrate, here the scrim overlying the crumb rubber layer, is determined in part by the rate at which the substrate passes the coating head and by the width over which the adhesive is applied. While the coat weight applied in a production run is much easier to determine, determination of the exact coat weight applied to a sample is more difficult. For different samples, coat weight may be varied by adjusting speed of movement of the sample through the machine. Thus, in order to produce a product, generally in sheet form, suitable for use as an underlay with low-grab characteristics, the manufacturing process should be varied by coat weight adjustment (which may be by speed of movement of the product through the coating machinery) until samples provide results by the FINAT Test method No: 2 peel adhesion test after 24 hours adhesive binding dwell-time within the limits prescribed above.

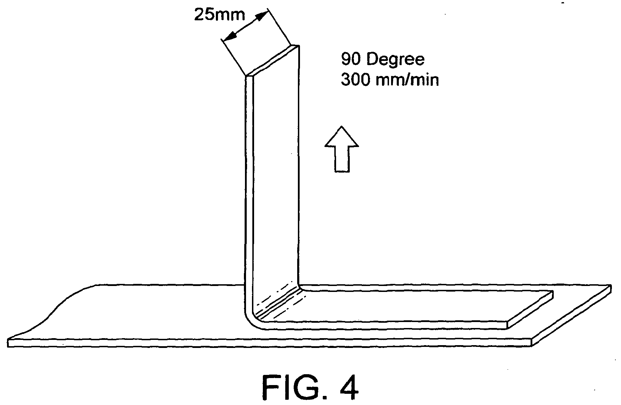

For details of peel adhesion testing by the FINAT Test Method No: 2, reference may be made to "FINAT Technical Handbook - Test Methods", 8th Edition, published by FINAT. This test provides an industry standard test for peel adhesion, which involves the use of test strips of rubber that are 25 mm wide and 200 mm long and are adhered to a glass substrate for an adhesive binding dwell-time of either 20 minutes or 24 hours and then pulled apart on a test rig at an angle of 90° by drawing an edge of the rubber strip perpendicularly away from the glass substrate at 300 mm/minute, and measuring the force required to achieve this, as indicated schematically in Fig. 4. A wide range of test equipment is commercially available from different manufacturers to carry out these tests. The tests for the samples of Table 2 (below) and Fig. 5 were performed using a Cheminstruments™ AR-1500 Adhesion Release Tester. Another suitable tester is a JJ Lloyd LR 30K plus Tensometer. The tests were performed at room temperature (23°C ± 1° C) and at a relative humidity of 50% ± 5%, temperature and humidity conditions found in a typical test laboratory. The results after 24 hours of adhesive binding dwell-time are regarded as the ultimate values, which are unlikely to improve even after extended periods. For comparison, the same tests were performed using a sample of the original RubberLay™ material.

**Table 2**

| **Sample ID** | **Newtons/25mm after 24 Hours Adhesive Binding Dwell Time at Room Temperature (23°C +/-1°C)** | **Coating Weight (g/m²)** |
|---|---|---|
| Low Grab Minimum | 1.77 | |
| 1 | 2.20 | 10.00 |
| 2 | 3.01 | 10.40 |
| Low Grab Maximum | 3.96 | |
| High Grab Minimum | 4.35 | |
| 3 | 4.40 | 13.97 |
| 4 | 4.46 | 14.00 |
| 5 | 4.75 | 15.84 |
| 6 | 4.89 | 16.44 |
| 7 | 5.23 | 23.20 |
| 8 | 5.33 | 25.20 |
| 9 | 5.68 | 27.52 |
| 10 | 10.27 | 64.92 |
| 11 | 10.96 | 65.20 |
| 12 | 12.09 | 75.84 |
| 13 | 16.37 | 89.20 |
| High Grab Maximum | 21.76 | |
| Original RubberLay | 23.20 | |

Fig. 5 shows the same results graphically, with a "best fit" line drawn through the data points, to which a zero coat weight point has been added, given that zero coat weight will necessarily show zero peel adhesion. There are relatively few data points at low coat weights, as it is inherently technically difficult to apply low coating weights. Even so, it will be seen that the "best-fit" line is a relatively poor fit for the first few data points. In reality, at very low coat weights, there is virtually no adhesion. Then, at a threshold coat weight, which for this particular adhesive appears to be at around 10g/m², the peel adhesion increases very rapidly with added coat weight, before leveling out with a peel adhesion of a little under 6 Newtons/25mm at a coat weight of between 20 and 30g/m² for this particular adhesive. At much higher coat weights, the rate of increase of peel adhesion with added coat weight again increases.

It transpires that it is in the region of rapid increase of peel adhesion with coat weight at lower coat weights, that the adhesive exhibits low-grab properties, while peel adhesions in the range of coat weights for which the peel adhesion levels off exhibit high-grab properties. This was established by carrying out test installations with samples of the coated underlay and different floor coverings.

We found that Sample IDs 1 and 2 allowed practical release from the floor covering. Carpet tiles could be removed from the underlay with their backing intact. Wood laminate could also be readily uplifted after installation, thereby enabling ready replacement of the floor covering. Similar release characteristics were found below rugs. The underlay could be removed from the rug and subsequently replaced. Thus Sample IDs 1 and 2 were characterized as low-grab.

However, when these same practical installation tests were repeated for Sample ID 3, when removing carpet tiles, some of the backing from the carpet tiles came away and remained on the underlay. When attempting to uplift a wood laminate, we found that it did not easily pull away. In some cases, the underlay was damaged when the laminate was removed. Accordingly, Sample ID 3 was not suitable for use where potential replacement of the floor covering may occur. It could not be characterized as a low-grab adhesive, and should be characterized as a high-grab adhesive at the lower end of the high-grab range.

Sample IDs 4 to 13 also exhibited high-grab characteristics.

The single sample of the original RubberLay™ material exhibited a very high peel adhesion significantly beyond that of any of our own test samples. It proved so fierce in practical installation tests that it provided no margin for any error during application, and so did not represent a practicable option even for installations requiring high-grab characteristics.

We have used the above test data to establish practical boundaries between low-grab and high-grab adhesives in terms of peel adhesion. Given that Sample ID 3 with a peel adhesion of 4.40 Newtons/25mm had been established as exhibiting high-grab characteristics, while Sample ID 2 with a peel adhesion of 3.01 Newtons/25mm worked well in installations that required a low-grab adhesive, we set the minimum boundary for high-grab adhesives at 1% below the Sample ID 3 level, namely at 4.35 Newtons/25mm, and the maximum peel adhesion for low-grab characteristics at 10% below the Sample ID 3 level, namely at 3.96 Newtons/25mm.

A minimum peel adhesion of 1.77 Newtons/25mm for a low-grab adhesive is effectively set by the practical problems in applying adhesive at very low coat weights. We were able to produce a single sample having a coat weight of 3g/m² that exhibited a peel adhesion of 1.01 Newtons/25mm. When this single sample was tested in practical installations calling for low-grab characteristics, it did not perform well, as it provided insufficient adhesion. The floor covering tended to move after application to the underlay. A practical lower limit for peel adhesion for satisfactory results can be set by taking the midpoint between this single unsatisfactory sample and Sample ID 1, which was known to have satisfactory low-grab characteristics, and adding 10%.

A practical maximum for peel adhesion for practicable high-grab characteristics can be established from the fact that Sample ID 13 with a peel adhesion of 16.37 Newtons/25mm performed well as a high-grab product, whereas the original RubberLay™ material exhibited a peel adhesion of 23.20 Newtons/25mm but was too fierce to be practicable. Accordingly, we can set a practical upper limit for high-grab peel adhesion by taking the midpoint between these figures and adding 10%, resulting in a practical upper limit of 21.76 Newtons/25mm.

The above figures for peel adhesion will determine practicable low-grab and high-grab products, regardless of the particular adhesive. Repeating the peel adhesion tests with a different adhesive, for example Henkel™ PD 1573 or Advanced Adhesives™ XM 2218, using samples having varying coat weights, would give a similar set of data points with a similar best-fit curve, but with the coat weights for the peel adhesion values required for low-grab and for high-grab being at different figures from those shown in Table 2 for Unikem™ HPS 800 C.

Thus, in order to produce an adhesive product, generally in sheet form, allowing adjustment in positioning on installation and subsequent removal, with a selected adhesive, whether one of those mentioned above or any other commercially available pressure sensitive adhesive, the manufacturing process should be varied by coat weight adjustment (which may be by speed of movement of the product through the coating machinery) until samples provide results by the FINAT Test method No: 2 peel adhesion test after 24 hours adhesive binding dwell-time that are within the limits for low-grab prescribed above.

A wide variety of adhesives are available on the market. A floor-covering contractor needing to fit a conventional underlay without any adhesive layer and a floor covering over the top of it, for example in a new office block or hotel, would likely have applied a selected adhesive to the underlying floor surface and/or between underlay and floor covering. The provision of an underlay with a pressure sensitive adhesive layer already present on the underlay, and that provides low-grab characteristics, represents a major departure from industry practice for flooring contractor use. It also opens up the possibility for the Do-it-Yourself market. The use of an underlay employing a low-grab adhesive is especially important where the underlay or floor covering might need to be lifted subsequently, for example for access to water and electricity services in or below the underlying floor, or for the replacement of soiled or worn carpeting or carpet tiles from time to time.

Although the above description with reference to Figs. 1 to 3 is in terms of use only of low-grab adhesives, we also contemplate a double scrim product in which low-grab adhesive is applied to one scrim layer and a high-grab adhesive, with peel adhesion within the limits for high-grab prescribed above, is applied to the other scrim layer. In use of this embodiment, we contemplate that the low-grab adhesive side would be applied to the sub-floor, while the high-grab adhesive side would be adhered to the floor covering in a context where permanent adhesion of the floor covering is desired. Alternatively, this could be reversed, with the high-grab adhesive adhered to the sub-floor and the low-grab adhesive adhered to the floor covering, which would prove useful in circumstances where the floor covering may need to be replaced from time to time, as when individual carpet tiles become soiled and need to be moved to another location or replaced with new ones.

In alternative arrangements, there may be low-grab adhesive on a scrim layer on both sides of the crumb rubber layer, or there may be low-grab adhesive on a scrim layer on one side and either high-grab or low-grab adhesive applied directly to the crumb-rubber material on the other side.

The use of adhesive products generally in sheet form, as taught herein, is not restricted to use as underlays.

Thus, in one example, a sheet of slip-resisting material formed of crumb-rubber bonded to a scrim sheet is adhered to the back or to the underside of a loose cushion to resist movement on upholstered furniture. The low-grab adhesive is applied to the scrim material in exactly the same way as described above for underlays. The exposed crumb-rubber surface resists slippage against an underlying surface. A similar sheet may be applied to the underside of a rug in a similar fashion. Rather than employing a sheet covering the whole underside or back surface of a cushion or rug, the adhesive product may be applied in discrete patches.

The generally sheet-form adhesive product may be formed as a removable mat or flooring for a motor vehicle for use on the floor of the seating compartment or on the floor of the boot (trunk). The latter use has the advantages that the mat/flooring is held in place by the low-grab adhesive, but may be lifted for cleaning or replacement, while the exposed crumb-rubber surface, in addition to cushioning any load, provides a slip resisting surface for objects, for example luggage, placed on the mat/flooring.

## Claims

1. A product, generally in sheet form, allowing adjustment in positioning on installation and subsequent removal, the product comprising: a layer comprising crumb-rubber material (12, 22, 32), and having a first side and a second side; scrim material (14, 24, 34) bonded to at least one of said first and second sides; and a coating of a pressure sensitive adhesive (16, 26, 36) applied to at least part of the exposed surface of the scrim material (14, 24, 34); **characterized in that** the pressure sensitive adhesive is a low-grab adhesive, a low-grab adhesive being defined as an adhesive which, when used to adhere a rubber strip 25 mm wide and 200 mm long to a glass substrate, after 24 hours adhesive binding dwell-time the force required to pull apart the test strip and glass substrate by a test rig at an angle of 90° by drawing an edge of the rubber strip perpendicularly away from the glass substrate at 300 mm/minute, at room temperature (23°C ± 1° C) and at a relative humidity of 50% ± 5%, is between 1.77 and 3.96 Newtons.

2. A product according to Claim 1, further **characterized in that** the crumb-rubber material (12, 22, 32) comprises individual crumbs of rubber bonded together by a bonding agent.

3. A product according to Claim 1, further **characterized in that** a layer of scrim material (14, 24, 34) is bonded to both of said first and second sides and the low-grab adhesive (16, 26, 36) is applied to at least part of the exposed surface of the scrim material (14, 24, 34) on both sides of the product.

4. A product according to Claim 1, further **characterized in that** a release sheet is adhered to the or each exposed adhesive surface.

5. A product according to Claim 1, in the form of an underlay for a floor covering.

6. Use of a product according to Claim 1, in the form of a slip-resisting material to be adhered to the base of a sofa or to the underside of a loose cushion to resist movement on upholstered furniture or to be adhered to the underside of a rug.

7. Use of a product according to Claim 1, in the form of a removable mat or flooring for a motor vehicle on the floor of the seating compartment or on the floor of the boot (trunk), the adhesive holding the mat/flooring in place but allowing it to be removed for cleaning, and the crumb-rubber surface providing slip resistance, as well as cushioning for objects, for example luggage, placed on the mat/flooring.

8. A method of determining whether a product, generally in sheet form, and comprising: a layer comprising crumb-rubber material (12, 22, 32), and having a first side and a second side, scrim material (14, 24, 34) bonded to at least one of said first and second sides, and a coating of a pressure sensitive adhesive (16, 26, 36) applied to at least part of the exposed surface of the scrim material (14, 24, 34), is adapted to allow adjustment in positioning on installation and subsequent removal; the method comprising the steps of: performing a 90° peel adhesion test in which a rubber test strip 25 mm wide and 200 mm long is adhered to a glass substrate, after 24 hours adhesive binding dwell-time, the force required to pull apart the test strip and glass substrate by a test rig at an angle of 90° by drawing an edge of the rubber strip perpendicularly away from the glass substrate at 300 mm/minute, the test being performed at room temperature (23°C ± 1°C) and at a relative humidity of 50% ± 5%, is between 1.77 and 3.96 Newtons.

9. A method of manufacturing a product, generally in sheet form, allowing adjustment in positioning on installation and subsequent removal, the method comprising the steps of: bonding crumbs of rubber to each other to form a crumb-rubber layer (12, 22, 32) and to a supporting scrim layer (14, 24, 34) on at least one side of the resulting crumb-rubber layer (12, 22, 32); and applying a pressure sensitive adhesive (16, 26, 36) to at least part of the exposed surface of the scrim material (14, 24, 34); the adhesive, when used to adhere a rubber test strip 25 mm wide and 200 mm long to a glass substrate, after 24 hours adhesive binding dwell-time, requires a force of between 1.77 and 3.96 Newtons at room temperature (23°C ± 1 ° C) and at a relative humidity of 50% ± 5%, to pull apart the test strip and glass substrate by a testing rig at an angle of 90° at 300 mm/minute.

## Patentansprüche

1. Produkt, allgemein in Plattenform, das eine Positionierausrichtung beim Verlegen und späteren Entfernen erlaubt, wobei das Produkt enthält: eine Schicht, die ein Krümelgummimaterial (12, 22, 32) enthält und eine erste Seite und eine zweite Seite hat; Gittergewebematerial (14, 24, 34), das auf mindestens eine der ersten und zweiten Seiten geklebt wird; und eine Beschichtung mit einem druckempfindlichen Kleber (16, 26, 36), der auf mindestens einen Teil der freiliegenden Fläche des Gittergewebematerials (14, 24, 34) aufgebracht wird; **dadurch gekennzeichnet, dass** der druckempfindliche Kleber ein schwach greifender Kleber ist, wobei ein schwach greifender Kleber als ein Kleber definiert wird, bei dem, wenn er verwendet wird, um einen Gummistreifen von 25 mm Breite und 200 mm Länge auf ein Glassubstrat zu kleben, nach 24 Stunden Klebebindungs-Kontaktzeit die erforderliche Kraft, um den Teststreifen und das Glassubstrat durch eine Prüfvorrichtung in einem Winkel von 90° auseinanderzuziehen, indem eine Ecke des Gummistreifens lotrecht vom Glassubstrat mit 300 mm/Minute bei Raumtemperatur (23°C ± 1°C) und einer relativen Feuchtigkeit von 50% ± 5% abgezogen wird, zwischen 1,77 und 3,96 Newton liegt.

2. Produkt nach Anspruch 1, weiter **dadurch gekennzeichnet, dass** das Krümelgummimaterial (12, 22, 32) einzelne Gummikrümel enthält, die durch ein Bindemittel miteinander verbunden werden.

3. Produkt nach Anspruch 1, weiter **dadurch gekennzeichnet, dass** eine Schicht aus Gittergewebematerial (14, 24, 34) mit beiden der ersten und zweiten Seite verbunden wird, und der schwach greifende Kleber (16, 26, 36) auf mindestens einen Teil der freiliegenden Fläche des Gittergewebematerials (14, 24, 34) auf beiden Seiten des Produkts aufgebracht wird.

4. Produkt nach Anspruch 1, weiter **dadurch gekennzeichnet, dass** eine abziehbare Folie auf die oder jede freiliegende Klebefläche geklebt wird.

5. Produkt nach Anspruch 1 in Form einer Unterlage für einen Bodenbelag.

6. Verwendung eines Produkts nach Anspruch 1 in Form eines rutschfesten Materials, das auf die Basis eines Sofas oder auf die Unterseite eines losen Kissens geklebt werden soll, um einer Bewegung auf einem Polstermöbel entgegenzuwirken oder um auf die Unterseite eines Teppichs geklebt zu werden.

7. Verwendung eines Produkts nach Anspruch 1 in Form einer entfernbaren Matte oder eines Fußbodenbelags für ein Kraftfahrzeug auf dem Boden des Sitzabteils oder auf dem Boden des Kofferraums (Laderaums), wobei der Kleber die Matte/den Fußbodenbelag an Ort und Stelle hält, es aber ermöglicht, sie/ihn zum Reinigen zu entfernen, und die Krümelgummifläche einen Rutschwiderstand sowie eine Polsterung für Gegenstände, zum Beispiel Gepäck, liefert, die auf der Matte/dem Fußbodenbelag angeordnet werden.

8. Verfahren zum Feststellen ob ein Produkt, allgemein in Plattenform, und das aufweist: eine Schicht, die ein Krümelgummimaterial (12, 22, 32) enthält und eine erste Seite und eine zweite Seite hat; Gittergewebematerial (14, 24, 34), das mit mindestens einer der ersten und zweiten Seiten verbunden ist; und eine Beschichtung mit einem druckempfindlichen Kleber (16, 26, 36), der auf mindestens einen Teil der freiliegenden Fläche des Gittergewebematerials (14, 24, 34) aufgebracht wird, geeignet ist, um die Positionierausrichtung beim Verlegen und späteren Entfernen zu erlauben; wobei das Verfahren die Schritte aufweist: Durchführen eines 90°-Klebkrafttests, bei dem ein Gummiteststreifen mit 25 mm Breite und 200 mm Länge auf ein Glassubstrat geklebt wird, nach 24 Stunden Klebebindungs-Kontaktzeit die erforderliche Kraft, um den Teststreifen und das Glassubstrat durch eine Testprüfvorrichtung in einem Winkel von 90° auseinanderzuziehen, indem eine Ecke des Gummistreifens lotrecht vom Glassubstrat mit 300 mm/Minute abgezogen wird, wobei der Test bei Raumtemperatur (23°C ± 1°C) und einer relativen Feuchtigkeit von 50% ± 5% durchgeführt wird, zwischen 1,77 und 3,96 Newton liegt.

9. Verfahren zur Herstellung eines Produkts, allgemein in Plattenform, das die Positionierausrichtung beim Verlegen und späteren Entfernen erlaubt, wobei das Verfahren die Schritte aufweist: Gummikrümel miteinander, um eine Krümelgummischicht (12, 22, 32) zu formen, und mit einer tragenden Gittergewebeschicht (14, 24, 34) auf mindestens einer Seite der resultierenden Krümelgummischicht (12, 22, 32) zu verbinden; und einen druckempfindlichen Kleber (16, 26, 36) auf mindestens einen Teil der freiliegenden Fläche des Gittergewebematerials (14, 24, 34) aufzubringen; wobei der Kleber, wenn er verwendet wird, um einen Gummiteststreifen mit 25 mm Breite und 200 mm Länge auf ein Glassubstrat zu kleben, nach 24 Stunden Klebebindungs-Kontaktzeit eine Kraft zwischen 1,77 und 3,96 Newton bei Raumtemperatur (23°C ± 10°C) und bei einer relativen Feuchtigkeit von 50% ± 5% erfordert, um den Teststreifen und das Glassubstrat durch eine Testprüfvorrichtung in einem Winkel von 90° mit 300 mm/Minute auseinanderzuziehen.

## Revendications

1. Produit, généralement en forme de feuille, permettant un réglage en position sur l'installation et une dépose ultérieure, ledit produit comprenant : une couche comprenant un matériau de caoutchouc granulé (12, 22, 32), et ayant un premier côté et un second côté ; un matériau de canevas (14, 24, 34) lié à au moins un desdits premier et second côtés ; et une couverture d'adhésif sensible à la pression (16, 26, 36) appliquée à au moins une partie de la surface exposée au matériau de canevas (14, 24, 34) ; **caractérisé en ce que** l'adhésif sensible à la pression est un adhésif à faible adhésion, un adhésif à faible adhésion étant défini comme un adhésif qui, lorsqu'il est utilisé pour adhérer une bande de test en caoutchouc de 25mm de large et de 200mm de long à un substrat de verre, après un temps de maintien de liaison adhésive de 24 heures, la force nécessaire pour séparer la bande de test et le substrat de verre par un appareil de test à un angle de 90° en tirant un bord de la bande en caoutchouc perpendiculairement au substrat de verre à 300mm/minute, à une température de pièce (23°C +/- 1°C) et à une humidité relative de 50% +/- 5%, est entre 1,77 et 3,96 newtons.

2. Produit selon la revendication 1, **caractérisé en outre en ce que** le matériau de caoutchouc granulé (12, 22, 32) comprend des granulats individuels de caoutchouc liés ensemble par un agent de liaison.

3. Produit selon la revendication 1, **caractérisé en outre en ce qu'**une couche de matériau de canevas (14, 24, 34) est liée à la fois au premier côté et au second côté et l'adhésif à faible adhésion (16, 26, 36) est appliqué à au moins une partie de la surface exposée du matériau de canevas (14, 24, 34) sur les deux côtés du produit.

4. Produit selon la revendication 1, **caractérisé en outre en ce qu'**une feuille amovible est adhérée à la ou chaque surface adhésive exposée.

5. Produit selon la revendication 1, sous la forme d'une sous-couche pour un revêtement de sol.

6. Utilisation d'un produit selon la revendication 1, sous la forme d'un matériau résistant au glissement pour être adhéré aux pieds d'un canapé ou sur la face inférieure d'un coussin amovible pour résister aux mouvements sur meuble rembourré ou pour être adhéré à la face inférieure d'un tapis.

7. Utilisation d'un produit selon la revendication 1, sous la forme d'un tapis ou d'un revêtement amovible pour véhicule à moteur sur le plancher du compartiment passager ou sur le plancher du coffre (malle), l'adhésif maintenant le tapis/plancher en place mais permettant de le retirer pour le nettoyage, et la surface de caoutchouc granulé proposant une résistance au glissement, comme un amortissement pour les objets, par exemple bagage, placés sur le tapis/plancher.

8. Procédé de détermination si un produit, généralement en forme de feuille, et comprenant : une couche comprenant un matériau de caoutchouc granulé (12, 22, 32), et ayant un premier côté et un second côté, un matériau de canevas (14, 24, 34) lié à au moins un desdits premier et second côtés ; et une couverture d'adhésif sensible à la pression (16, 26, 36) appliquée à au moins une partie de la surface exposée du matériau de canevas (14, 24, 34), est adapté pour permettre le réglage en position sur installation et une dépose ultérieure, le procédé comprenant les étapes de : réaliser un test d'adhésion par pelage à 90° dans lequel une bande de test en caoutchouc de 25mm de large et de 200mm de long est adhérée à un substrat de verre, après un temps de maintien de liaison adhésive de 24 heures, la force nécessaire pour séparer la bande de test et le substrat de verre par un appareil de test à un angle de 90° en tirant un bord de la bande en caoutchouc perpendiculairement au substrat de verre à 300mm/minute, le test étant réalisé à une température de pièce (23°C +/-1°C) et à une humidité relative de 50% +/- 5%, est entre 1,77 et 3,96 newtons.

9. Procédé de fabrication d'un produit, généralement en forme de feuille, permettant un réglage en position sur installation et une dépose ultérieure, ledit procédé comprenant les étapes de : lier des granulats de caoutchouc les uns aux autres pour former une couche de caoutchouc granulé (12, 22, 32) et à une couche de canevas (14, 24, 34) de support sur au moins un côté de la couche de caoutchouc granulé (12, 22, 32) résultante ; et appliquer un adhésif sensible à la pression (16, 26, 36) à au moins une partie de la surface exposée du matériau de canevas (14, 24, 34) ; l'adhésif, lorsqu'il est utilisé pour adhérer une bande de test en caoutchouc de 25mm de large et de 200mm de long à un substrat de verre, après un temps de maintien de liaison adhésive de 24 heures, requiert une force entre 1,77 et 3,96 newtons à une température de pièce (23°C +/- 1°C) et à une humidité relative de 50% +/- 5%, pour séparer la bande de test et le substrat de verre par un appareil de test à un angle de 90° à 300mm/minute.
